# EUROPÄISCHE PATENTSCHRIFT

(11) **EP 2 902 692 B1**
(45) Veröffentlichungstag und Bekanntmachung des Hinweises auf die Patenterteilung: **25.10.2017**
(21) Anmeldenummer: 14165667.8
(22) Anmeldetag: 23.04.2014
(51) Int. Cl.: F17C 1/00, F17C 1/16

(54) **Bauteil eines Tanksystems**
Component of a tank system
Composant d'un système de réservoir

(30) Priorität: 06.12.2013 EP 13196052
(43) Veröffentlichungstag der Anmeldung: 05.08.2015
(73) Patentinhaber: MAGNA STEYR Engineering AG & Co KG, 8041 Graz (AT)
(72) Erfinder: Bartlok, Guido, 8010 Graz (AT); Schärfl, Alexander, 8010 Graz (AT)
(74) Vertreter: Zangger, Bernd

(56) Entgegenhaltungen:
- DE-A1- 19 826 681
- DE-A1-102009 025 386
- DE-A1-102009 029 245
- JP-A- 2005 180 605
- US-A1- 2013 200 302

## Beschreibung

### Gebiet der Erfindung

Die vorliegende Erfindung betrifft einen Bauteil eines Tanksystems, wobei das Tanksystem zum Speichern von gasförmigen oder flüssigen Medien wie Wasserstoff ausgelegt ist und ein Verfahren zur Herstellung des Bauteils.

### Stand der Technik

Derartige Bauteile sind insbesondere Druckbehälter zur Speicherung von gasförmigen oder flüssigen Medien, wie beispielsweise Erdgas (CH4) oder Wasserstoff (H2) oder auch Leitungen zur fluidleitenden Verbindung eines solchen Druckbehälters oder an diesen Leitungen angeordnete Armaturen. Derartige Bauteile eins Tanksystems werden unter anderem im Automotive-Bereich genutzt und vor allem in Leichtbau-Bauweise gefertigt.

Druckbehälter bestehen meist aus einem Kunststoff-Innenbehälter der auch Liner genannt wird, mit üblicherweise mindestens einer Öffnung in der ein Metallkörper (sogenannter "Boss") für die Aufnahme einer Armatur steckt und außenseitig einer lastragenden Verbundwerkstoff-Umwickelung.

Die Dichtheit des Behälters gegenüber dem Speichermedium wird maßgeblich durch den Liner bestimmt. Es sind folgende Bauweisen dafür bekannt und kommen derzeit zur Anwendung: Monolayer-Bauweise aus einem Kunststofftyp, z.B. aus HDPE (siehe zum Beispiel DE 102009025386 A1), aus PA (US 000005499739), aus POM (WO 002007035371 A1), aus PPS (EP 000001228862 B1); Monolayer beschichtet: z.B. Fluorieren von HDPE-Kraftstofftanks, Aufbringung von Folien (WO 002012100922 A1), Multilayer-Bauweise im Co-Extrusionsverfahren (z.B. 5 bis 7-Schichtverfahren mit EVOH-Barriere für Benzintanks).

Druckbehälter für Speichermedien wie z.B. Erdgas oder Wasserstoff müssen gewährleisten, dass durch die Behälterwandung nur eine geringe Menge an Gas hindurchdiffundiert und sich keine explosionsgefährliche Konzentration bilden kann. Auch aus Umweltschutzgründen ist der Austritt von gewissen Medien nicht erwünscht.

Hierbei muss immer ein Kompromiss aus mechanischen Eigenschaften, Barrierewirkung gegenüber dem zu speichernden Gas und Kosten gefunden werden. Weist ein Material beispielsweise eine gute Gasundurchlässigkeit auf, ist es üblicherweise sehr spröde, mit geringem Dehnungsvermögen bei tiefen Temperaturen und wird im Betrieb rissig bis hin zum totalen Versagen. Liner aus Materialien mit guten mechanischen Eigenschaften wiederum müssen mit sehr großer Wandstärke ausgeführt werden um die Permeationsgrenzwerte einhalten zu können - dies macht sie dann wiederum sehr schwer und teuer und viel wertvolles Speichervolumen geht verloren.

Bekannte Beschichtungstechniken sowie Multilayer-Bauweisen sind sehr teuer aufgrund der verwendeten Werkstoffe bzw. durch die aufwändigen Fertigungsverfahren und -anlagen. Des Weiteren kann es im Betrieb zu Ablösungseffekten der Schichten zueinander kommen und eine Zerstörung des Liners bewirkt werden.

Auch für andere Bauteile eines Tanksystems, wie Leitungen, Armaturen und Gehäuse, ist es wichtig, dass Speichermedien wie Erdgas oder Wasserstoff nicht in größerer Menge durch die jeweiligen Wandungen hindurchdiffundieren können. Daher werden diese Wandungen üblicherweise aus Metall gefertigt.
Die DE 10 2009 029 245 A1 offenbart einen mobilen Tank für einen kryogenen Treibstoff mit einer äußeren Struktur und einer flexiblen, druckfesten, kälteresistenten Innenhülle. Der Tank kann eine aus Graphen bestehende äußere Hülle aufweisen.
Die US 2013/0200302 A1 offenbart ein Verfahren um eine Substanz mit Graphen einzuhüllen. Die DE 10 2009 025 386 offenbart einen doppelwandigen Behälter.

### Zusammenfassung der Erfindung

Es ist eine Aufgabe der Erfindung, Bauteile eines Tanksystems der genannten Art in dieser Hinsicht zu verbessern und insbesondere Bauteile anzugeben, die hohe Gasundurchlässigkeit mit guten mechanischen Eigenschaften und geringem Gewicht verbinden, sowie ein kostengünstiges Herstellungsverfahren für derartige Bauteile.
Die Lösung der Aufgabe erfolgt durch ein Bauteil eines Tanksystems zum Speichern von gasförmigen oder flüssigen Medien wie Wasserstoff, nämlich einen Druckbehälter, mit den weiteren Merkmalen gemäß Anspruch 1 und durch ein Verfahren zur Herstellung des Bauteils, nämlich des Druckbehälters, mit den Merkmalen des Anspruchs 4.
Graphen ist ein modifizierter Kohlenstoff, welcher einschichtig mit 2-dimensionaler Struktur vorliegt. Auch Graphenoxid kann als Gasbarriere verwendet werden. Als Ausgangsbasis zur Gewinnung der Graphenflocken dient einfacher Graphit. Die Aufbringung von Graphen bzw. Graphenoxid Beschichtungen kann bevorzugt mittels einer wässrigen Lösung erfolgen.

Erfindungsgemäß ist es möglich Bauteile die bisher zur Sicherstellung der geforderten Dichtheit aus Metall gefertigt werden mussten aus Kunststoff mit einer Beschichtung umfassend Graphen oder eine Graphenverbindung zu fertigen.

Ein erfindungsgemäßer Bauteil weist insbesondere geringe Permeabilität, gute mechanische und thermische Eigenschaften auf und eignet sich für Fertigungsverfahren mit hohen Stückzahlen.

Optimal für eine Gasbarriere eines Bauteils ist es, wenn nur die möglichst dichte Barriereschicht mit dem Speichermedium in Kontakt kommt und die Sperrwirkung übernimmt und die dahinter angeordneten Materialien das trotzdem noch durch die Barriereschicht wandernde Medium möglichst ungehindert aus dem Bauteil in die Atmosphäre entweichen lassen.

Diese Vorteile werden durch die, unter anderem in den Ansprüchen, genannten Ausführungsformen der Erfindung erreicht.

Erfindungsgemäß ist die Permeations-Barriereschicht an einer Innenseite des Bauteils ausgebildet.

Die Permeations-Barriereschicht kann eine Graphenverbindung umfassen die Graphenoxid beinhaltet, insbesondere vollständig durch Graphenoxid gebildet sein.

Das Bauteil kann bevorzugt aus Kunststoff bestehen. Somit können Metall-Bauteile durch leichtere und kostengünstigere beschichtete Kunststoffteile ersetzt werden.

Das Bauteil ist erfindungsgemäß ein Druckbehälter.

Beim Einsatz von Graphen als Beschichtung können kostengünstige Linermaterialien mit ausgezeichneten mechanischen Eigenschaften verwendet werden. Es erlaubt auch die Realisierung von Linern in besonders dünner Bauweise, die je nach Wunsch vorab schon beschichtet werden können oder erst nachträglich am fertigen Druckbehälter.

Ein erfindungsgemäßer Druckbehälter vermeidet oder verringert auch die folgenden Nachteile, die sich insbesondere bei konventionellen Druckbehältern mit Innenliner aus Kunststoff, man spricht hier von Behältern in der Bauweise TypIV, ergeben:
- Zielkonflikt mechanische und thermische Eigenschaften zu Barrierewirkung,
- bei hohen Permeationsraten Ansammlung von Gas in der Zwischenschicht Liner und lasttragende Struktur, was bei schneller Gasentnahme aus dem Behälter zu Einbeulen des Liners nach Innen und zu dessen Beschädigung führen kann,
- Blasenbildung im Liner in Folge Material-Inhomogenitäten bei schneller Gasentnahme aus dem Behälter wenn der Liner mit Gas gesättigt ist ("Schwammeffekt" bei längere Druckbeaufschlagung des Behälters).

Erfindungsgemäß ist die Permeations-Barriereschicht an einer Innenseite des Druckbehälters ausgebildet.

Erfindungsgemäß weist der Druckbehälter auf der Innenseite der lasttragenden Behälterwand einen Liner auf, wobei die Permeations-Barriereschicht direkt auf den Liner aufgebracht ist, nämlich auf der Innenseite des Liners.

Ein erfindungsgemäßes Verfahren zur Herstellung eines Bauteils umfasst den Schritt, dass Graphen oder eine Graphenverbindung wie Graphenoxid als wässrige Lösung auf das Bauteil aufgebracht wird, nämlich an der Innenseite des Bauteils.

Das Bauteil ist ein Druckbehälter und Graphen oder eine Graphenverbindung wie Graphenoxid wird als wässrige Lösung an der Innenseite eines an der Innenseite der lasttragenden Behälterwand angeordneten Liners aufgebracht.

Liner können dabei vor der Anbringung am Druckbehälter beschichtet werden oder erst nachträglich am fertigen Druckbehälter.

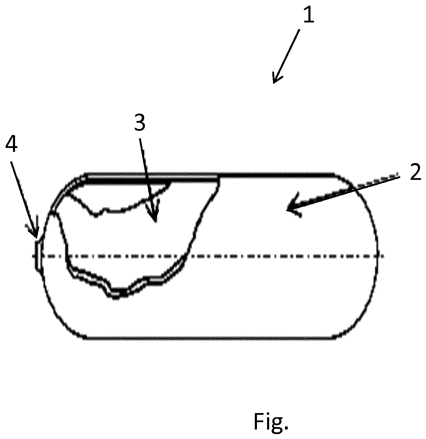

### Kurzbeschreibung der Zeichnung

Die Erfindung wird im Folgenden beispielhaft unter Bezugnahme auf die Zeichnung beschrieben.
- Fig.: ist eine schematische dreidimensionale Schnitt-Darstellung eines erfindungsgemäßen Bauteils, nämlich eines Druckbehälters.

### Beschreibung der Erfindung

In Fig. ist ein erfindungsgemäßer Druckbehälter 1 zum Speichern von gasförmigen oder flüssigen Medien, insbesondere von Wasserstoff, dargestellt. Zur besseren Sichtbarkeit der Schichten des Druckbehälters 1 ist dieser teilweise aufgeschnitten. Der zylindrische Druckbehälter 1 wird durch eine lasttragende Behälterwand 2 aus einem Faserverbundmaterial gebildet, an deren Innenseite ein Liner 3 aus Kunststoff angeordnet ist. In den Liner 3 ist ein Boss 4 aus Metall zur Aufnahme einer Armatur eingearbeitet. Als Permeations-Barriereschicht ist direkt auf der Innenseite des Liners 3 eine Beschichtung umfassend Graphen oder Graphenoxid aufgebracht.

### Bezugszeichenliste

- 1: Druckbehälter
- 2: lasttragende Behälterwand
- 3: Liner
- 4: Boss

## Patentansprüche

1. Bauteil eines Tanksystems zum Speichern von gasförmigen oder flüssigen Medien wie Wasserstoff, wobei das Bauteil ein Druckbehälter (1) ist, wobei der Druckbehälter (1) auf der Innenseite einer lasttragenden Behälterwand (2) einen Liner (3) aufweist,
**dadurch gekennzeichnet, dass** das Bauteil als Permeations-Barriereschicht eine Beschichtung umfassend Graphen oder eine Graphenverbindung aufweist, wobei die Permeations-Barriereschicht auf der Innenseite des Liners (3) aufgebracht ist.

2. Bauteil nach einem der zuvor genannten Ansprüche, **dadurch gekennzeichnet, dass** die Graphenverbindung Graphenoxid ist.

3. Bauteil nach einem der zuvor genannten Ansprüche, **dadurch gekennzeichnet, dass** das Bauteil aus Kunststoff besteht.

4. Verfahren zur Herstellung eines Bauteils nach einem der zuvor genannten Ansprüche, **dadurch gekennzeichnet, dass** Graphen oder eine Graphenverbindung wie Graphenoxid als wässrige Lösung an der Innenseite des an der Innenseite der lasttragenden Behälterwand (2) angeordneten Liners (3) aufgebracht wird.

## Claims

1. Component of a tank system for storing gaseous or liquid media such as hydrogen, the component being a pressure vessel (1), the pressure vessel (1) having a liner (3) on the inner side of a load-bearing vessel wall (2),
**characterized in that** the component has as a permeation barrier layer a coating comprising graphene or a graphene compound, the permeation barrier layer having been applied to the inner side of the liner (3).

2. Component according to one of the preceding claims,
**characterized in that** the graphene compound is graphene oxide.

3. Component according to one of the preceding claims,
**characterized in that** the component consists of plastic.

4. Method for producing a component according to one of the preceding claims, **characterized in that** graphene or a graphene compound such as graphene oxide is applied as an aqueous solution to the inner side of the liner (3) arranged on the inner side of the load-bearing vessel wall (2).

## Revendications

1. Composant d'un système de réservoir pour stocker des milieux gazeux ou liquides tels que de l'hydrogène, le composant étant un récipient sous pression (1), le récipient sous pression (1) présentant, sur le côté intérieur d'une paroi de récipient porteuse de charge (2) une doublure (3), **caractérisé en ce que** le composant présente, en tant que couche barrière de perméabilité, un revêtement comprenant du graphène ou un composé de graphène, la couche barrière de perméabilité étant appliquée sur le côté intérieur de la doublure (3).

2. Composant selon l'une quelconque des revendications précédentes, **caractérisé en ce que** le composé de graphène est de l'oxyde de graphène.

3. Composant selon l'une quelconque des revendications précédentes, **caractérisé en ce que** le composant se compose de plastique.

4. Procédé de fabrication d'un composant selon l'une quelconque des revendications précédentes, **caractérisé en ce que** du graphène ou un composé de graphène tel que de l'oxyde de graphène est appliqué en tant que solution aqueuse sur le côté intérieur de la doublure (3) disposée sur le côté intérieur de la paroi de récipient porteuse de charge (2).
